# EUROPEAN PATENT SPECIFICATION

(11) **EP 3 483 762 B1**
(45) Date of publication and mention of the grant of the patent: **16.10.2019**
(21) Application number: 18215679.4
(22) Date of filing: 23.07.2004
(51) Int. Cl.: G06F 21/31

(54) **USER AUTHENTICATION METHOD AND PROGRAM, AND IMAGE FORMING APPARATUS**
BENUTZERAUTHENTIFIZIERUNGSVERFAHREN UND -PROGRAMM UND BILDERZEUGUNGSVORRICHTUNG
PROCÉDÉ ET PROGRAMME D'AUTHENTIFICATION D'UTILISATEUR ET APPAREIL DE FORMATION D'IMAGES

(30) Priority: 24.07.2003 JP 2003200958; 15.06.2004 JP 2004177053
(43) Date of publication of application: 15.05.2019
(62) Divisional of application: 04254417.1
(73) Proprietor: Ricoh Company, Ltd., Tokyo 143-8555 (JP)
(72) Inventor: MIHIRA, Sachiko, Yokohama-shi, Kanagawa (JP); ITO, Tatsuo, Sagamihara-shi, Kanagawa (JP)
(74) Representative: J A Kemp

(56) References cited:
- EP-A- 1 043 648
- US-A- 5 774 551
- US-A1- 2002 184 217

## Description

### BACKGROUND OF THE INVENTION

### 1. Field of the Invention

The present invention relates to user authentication methods in image forming apparatuses, image forming apparatuses that perform the user authentication methods, and user authentication programs.

### 2. Description of the Related Art

Recently, an image forming apparatus (multi-functional apparatus) is known that accommodates the function of each apparatus, such as a FAX machine, a printer, a copying machine, and a scanner, in one housing. The image forming apparatus includes in the housing a display part, a printing part and an imaging part, for example, and also includes four kinds of applications corresponding to a FAX machine, a printer, a copying machine, and a scanner. By switching the applications, the image forming apparatus is caused to operate as a FAX machine, a printer, a copying machine, or a scanner.

In the case of the image forming apparatus having a lot of functions as mentioned above, in some cases, a user logs onto the image forming apparatus by using a user name and a password, and the image forming apparatus limits available functions depending who the user is.

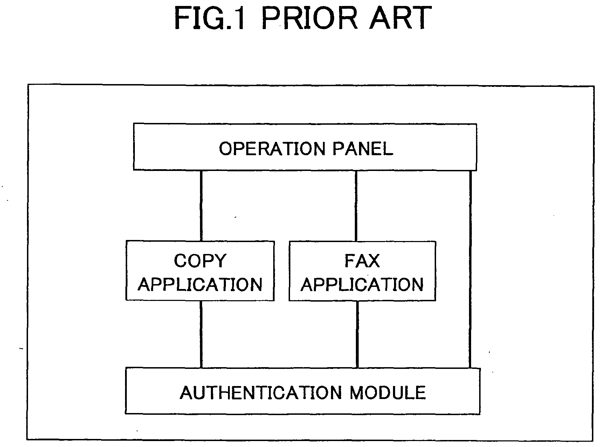

FIG. 1 shows a structure of such an image forming apparatus. In FIG. 1, an operation panel, a copy application, a FAX application, and an authentication module are shown. The operation panel is an operation part that receives an input operation by the user and displays information for the user. The copy application and the FAX application are applications for realizing a copying function and a FAX function, respectively. The authentication module performs authentication of the user.

In addition to the above-mentioned structure, an authentication database necessary for authentication and a user related information database storing information related to the user are required.

By authenticating the user with the authentication module, it is possible for the copy application and the FAX application to determine whether the user can use the image forming apparatus.

However, there is a problem in that, since the specification of the image forming apparatus is not very high and the image forming apparatus must carry out an image forming process, which is a heavy workload process, mounting of the above-mentioned databases and the authentication process in the image forming apparatus may hinder the image forming process.

Hence, in some cases, the databases are provided in an apparatus such as a PC connected to a plurality of image forming apparatuses via a network, and the authentication process for the image forming apparatuses is performed in the PC. In this case, a user registered in the databases can be authenticated in and use any of the image forming apparatuses connected to the PC.

On the other hand, in some cases, a specific user may temporarily use only a specific image forming apparatus. In this case, information unrelated to the other image forming apparatuses is stored in the databases. Thus, there is a problem in that the hardware resource of the PC is not effectively used and an updating operation of the databases is required.

EP 1,043,648 discloses an image forming apparatus and a plurality of separate authentication modules. A user is authenticated using one of the authentication modules.

US 5,774,551 discloses a pluggable account management interface with unified login and logout and multiple user authentication services.

### SUMMARY OF THE INVENTION

A general object of the present, invention is to provide an improved and useful user authentication method, image forming apparatus, and user authentication program in which one or more of the above-mentioned problems are eliminated.

Another and more specific object of the present invention is to provide a user authentication method, an image forming apparatus, and a user
authentication program that are preferable for an image forming apparatus.

The invention is defined in the claims.

As mentioned above, according to the present invention, it is possible to provide a user
authentication method, an image forming apparatus, and a user authentication program that are preferable for an image forming apparatus.

Other objects, features and advantages of the present invention will become more apparent from the following detailed description when read in conjunction with the following drawings.

### BRIEF DESCRIPTION OF THE DRAWINGS

FIG. 1 is a block diagram showing the structure of a conventional image forming apparatus;
FIG. 2 is a block diagram showing the structure of a multi-functional apparatus according to one embodiment of the present invention;
FIG. 3 is a block diagram showing the hardware configuration of the multi-functional apparatus according to the embodiment of the present invention;
FIG. 4 is a block diagram showing the entire structure according to the embodiment of the present invention;
FIG. 5 is a table showing an authentication DB;
FIG. 6 is a table showing a user directory DB;
FIG. 7 is a schematic diagram showing user interfaces;
FIG. 8 is a sequence diagram showing processes until a user logs in;
FIG. 9 is a diagram showing an authentication information obtaining request function;
FIG. 10 is a diagram showing a WS request transmission request function;
FIG. 11 is a diagram showing the contents of a user authentication request;
FIG. 12 is a diagram showing the contents of a response to the user authentication request;
FIG. 13 is a sequence diagram showing processes from execution of copying to logout;
FIG. 14 is a sequence diagram showing processes in which a user directory WS is used;
FIG. 15 is a schematic diagram showing user interfaces;
FIG. 16 is a schematic diagram showing a destination list screen;
FIG. 17 is a sequence diagram showing processes in the case where FAX transmission is performed;
FIG. 18 is a sequence diagram showing processes in which a user logs in from a PC;
FIG. 19 is a diagram showing the contents of a user authentication request in ticket authentication;
FIG. 20 is a diagram showing the contents of a response to the user authentication request in ticket authentication;
FIG. 21 is a schematic diagram showing an authentication set screen;
FIG. 22 is a schematic diagram showing a bit field; and
FIG. 23 is a flowchart showing processes of user authentication.

### DETAILED DESCRIPTION OF THE PREFERRED EMBODIMENTS

A description is given below of embodiments of the present invention with reference to the drawings.

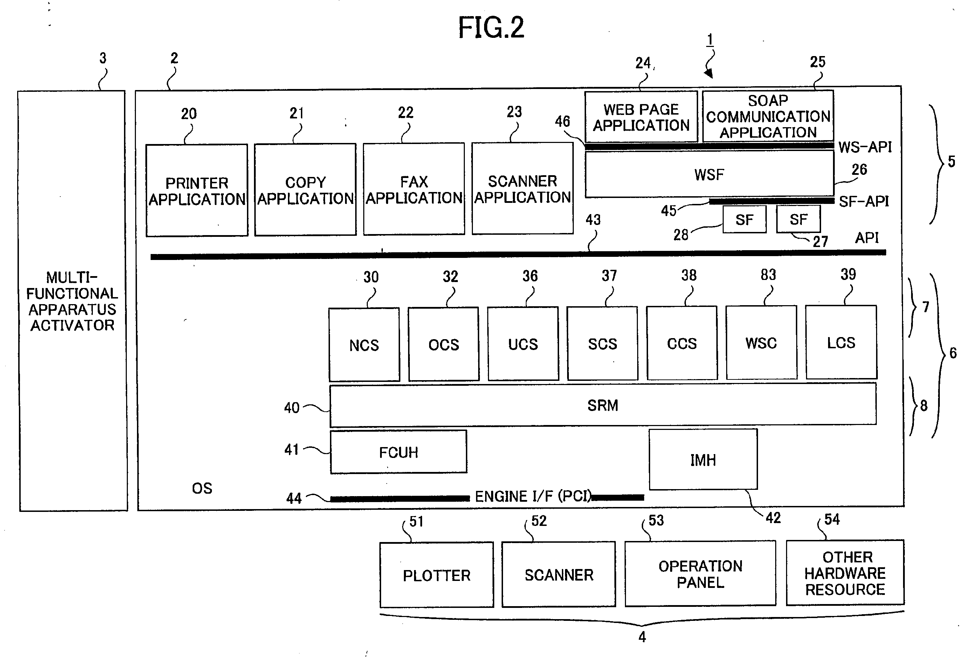

Referring to FIG. 2, a description is given of programs installed in a multi-functional apparatus 1. FIG. 2 shows a group of programs 2 of the multi-functional apparatus 1, a multi-functional apparatus activator 3, and hardware resources 4.

The group of programs 2 includes an application layer 5 and a controller layer 6 activated on an operating system (hereinafter referred to as "OS") such as UNIX (registered trademark).

The hardware resources 4 include a plotter 51, a scanner 52, an operation panel 53, and the other hardware resources 50 such as an ADF (Auto Document Feeder). The operation panel 53 corresponds to user authentication information obtaining means and authentication result specifying means.

The multi-functional apparatus activator 3 is first operated at the time when the power of the multi-functional apparatus 1 is turned ON, and activates the application layer 5 and the controller layer 6.

The application layer 5 includes a printer application 20, which is an application for printer, a copy application 21, which is an application for copying, a FAX application 22, which is an application for facsimile, and a scanner application 23, which is an application for scanner.

Further, the application layer 5 includes a WEB page application 24, a SOAP communication application 25, one or more shared functions (hereinafter referred to as "SF") 27 and 28, a WEB service function (hereinafter referred to as "WSF") 26 provided between the WEB page application 24 and the SOAP communication application 25 and the SFs 27 and 28. It should be noted that SOAP stands for Simple Object Access Protocol.

The WSF 26 includes a WS-API 46 that receives a process request from the WEB page application 24 and the SOAP communication application 25 by means of a predetermined function. In addition, the SFs 27 and 28 include an SF-API 45 that receives a process request from the WSF 26 by means of a predetermined function.

Upon reception of a process request from the WEB page application 24 or the SOAP communication application 25 via the WS-API 46, the WSF 26 selects the SF 27 and/or the SF 28 depending on the process request. The WSF 26 transmits via the SF 27 or the SF 28, selected depending on the process request, the process request received via the WS-API 46. Upon reception of the process request via the SF-API 45, the SF 27 or the SF 28 performs a process corresponding to the process request.

In addition, the WEB page application 24 performs a process as a client of a WEB authentication service, and the SOAP communication application 25 performs generation and interpretation of a SOAP message.

The controller layer 6 includes: a control service layer 7 that interprets the process request from the application layer 5 and issues an obtaining request of the hardware resources 4; a system resource manager (hereinafter referred to as "the system resource manager") 40 that manages one of more of the hardware resources 4 and adjusts the obtaining request from the control service layer 7; and a handler layer 8 that manages the hardware resources 4 in accordance with the obtaining request from the SRM 40.

The control service layer 7 is configured to include one or more service modules, for example: a network control service (hereinafter referred to "the NCS") 30; an operation panel control service (hereinafter referred to as "the OCS") 32; a user information control service (hereinafter referred to as "the UCS") 36; a system control service (hereinafter referred to as "the SCS") 37; an authentication control service (hereinafter referred to as "the CCS") 38; and a logging control service (hereinafter referred to as "the LCS") 39. The CCS 38 corresponds to authentication party determination means, authentication means, and authentication result obtaining means.

Further, the controller layer 6 is configured to include an API 43 that enables reception of a process request from the application layer 5 by means of a predetermined function.

The process of the NCS 30 provides a service that can be used in common with respect to applications that require a network I/O, assigns data received according to each protocol from a network to each application, and mediates transmission of data from each application to the network.

In addition, the NCS 30 includes an HTTPD (HyperText Transfer Protocol Daemon) and a FTPD (File Transfer Protocol Daemon) that control data communications with a network instrument connected to the multi-functional apparatus 1 via a network.

The process of the OCS 32 performs control related to the display on the operation panel 53, which serves as information transmission means between the main body control and a user or a service person who performs maintenance and inspection.

The process of the UCS 36 performs management of users, such as management of user IDs and passwords. The CCS 38 controls authentication, targeted at a module of local authentication. Additionally, the CCS 38 determines which is to be used for authentication: a local authentication module within the multi-functional apparatus 1 or an authentication Web service such as a user authentication Web service, which is described later. The LCS 39 manages the logging of information used by a user.

The SCS 37 performs processes such as application management, operation panel control, system screen display, LED display, hardware resource management, and interrupting application control.

The SRM 40 performs system control and management of the hardware resources 4 together with the SCS 37. For example, the process of the SRM 40 performs adjustment and execution control in accordance with an obtaining request from an upper layer that uses the hardware resources 4 such as the plotter 51 and the scanner 52.

The handler layer 8 includes a FAX control unit handler (hereinafter referred to as "the FCUH") 41 that manages a FAX control unit (hereinafter referred to as "the FCU"), which is described later, and an image memory handler (hereinafter referred to as "the IMH") that assigns memory to a process and manages the memory assigned to the process. Each of the SRM 40 and the FCUH 41 issues a process request with respect to the hardware resources 4 by using the engine I/F 44, which enables transmission of a process request to the hardware resources 4 by means of a predetermined function.

As mentioned above, it is possible for the multi-functional apparatus 1 to perform processes required in common for each application in the controller layer 6 in a consolidated manner.

Next, a description is given below of the hardware configuration of the multi-functional apparatus 1.

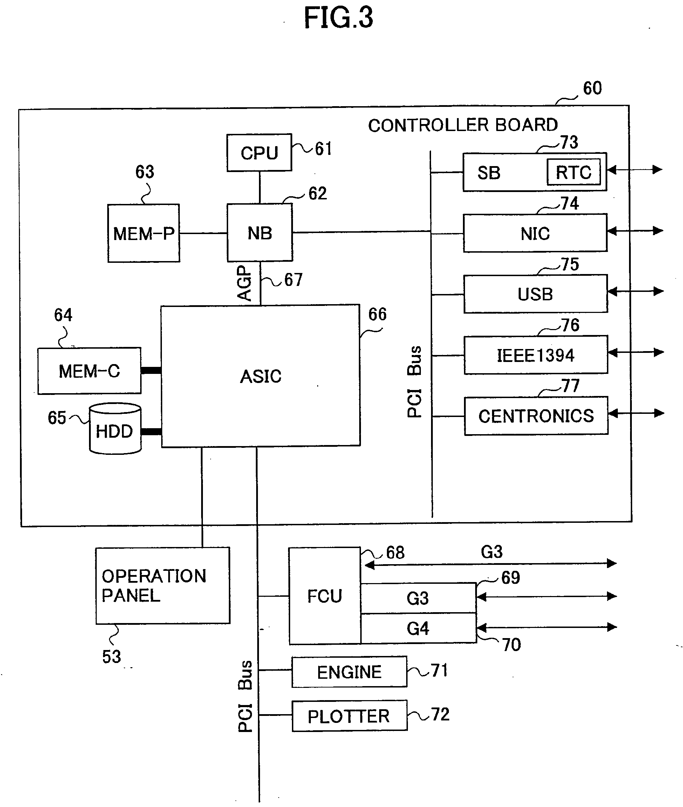

FIG. 3 is a block diagram showing the hardware configuration of the multi-functional apparatus 1 according to one embodiment of the present invention. The multi-functional apparatus 1 includes a controller board 60, the operation panel 53, an FCU 68, an engine 71, and a plotter 72. In addition, the FCU 68 includes a G3 standard corresponding unit 69 and a G4 standard corresponding unit 70.

In addition, the controller board 60 includes a CPU 61, an ASIC 66, a HDD 65, a local memory (MEM-C) 64, a system memory (MEM-P) 63, a northbridge (hereinafter referred to as "the NB") 62, a south bridge (hereinafter referred to as "the SB") 73, a NIC (Network Interface Card) 74, a USB device 75, an IEEE 1394 device 76, and a centronics device 77.

The operation panel 53 is connected to the ASIC 66 of the controller board 60. Additionally, the SB 73, the NIC 74, the USB device 75, the IEEE 1394 device 76, and the centronics device 77 are connected to the NB 62 via a PCI bus.

In addition, the FCU 68, the engine 71, and the plotter 51 are connected to the ASIC 66 of the controller board 60 via another PCI bus.

Further, in the controller board 60, the local memory 64 and the HDD 65, for example, are connected to the ASIC 66, and the CPU 61 is connected to the ASIC 66 via the NB 62, which is a part of a CPU chipset.

Additionally, the ASIC 66 and the NB 62 are connected to each other not via a PCI bus but via a AGP (Accelerated Graphics Port) 67.

The CPU 61 controls the multi-functional apparatus 1. The CPU 61 activates as a process and executes each of the NCS 30, the OCS 32, the UCS 36, the SCS 37, the CCS 38, the LCS 39, the SRM 40, the FCUH 41 and the IMH 42 on the OS. In addition, the CPU 61 activates and executes the printer application 20, the copy application 21, the FAX application 22, the scanner application 23, the Web page application 24, and the SOAP communication application 25, which form the application layer 5.

The NB 62 is a bridge for connecting the CPU 61, the system memory 63, the SB 73 and the ASIC 66 to each other. The system memory 63 is used as, for example, a memory for images of the multi-functional apparatus 1. The SB 73 is a bridge for connecting the NB 62, the PCI bus, and the peripheral devices to each other. Further, the local memory 64 is a memory used as an image buffer for copying and/or a code buffer.

The ASIC 66 is an IC for image processing including a hardware element for image processing. The HDD 65 is a storage for accumulation of image data, accumulation of document data, accumulation of programs, accumulation of font data, and accumulation of forms. In addition, the operation panel 53 receives an input operation by a user and displays a screen for the user.

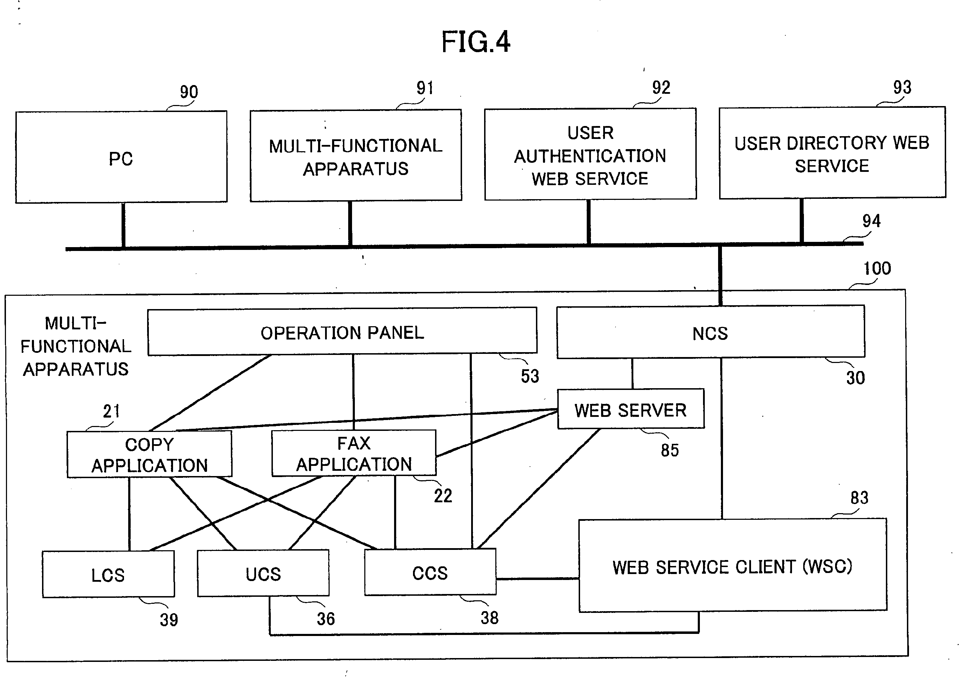

Next, referring to FIG. 4, a description is given below of the entire structure according to this embodiment. FIG. 4 shows multi-functional apparatuses 91 and 100, a PC 90, a user authentication Web service 92 corresponding to an authentication apparatus, a user directory Web service 93 corresponding to a user related information storing apparatus, and a network 94 via which these apparatuses and services are connected. In addition, the multi-functional apparatus 100 includes the operation panel 53, the copy application 21, the FAX application 22, the LCS 39, the UCS 36, the CCS 38, the NCS 30, a WSC 83 and a Web server 85.

The WSC 83 converts a Web service execution request provided from the CCS 38 to a SOAP request message, and notifies a Web service formed by the user authentication Web service 92 or the user directory Web service 93 of the SOAP request message. In addition, The WSC 83 analyzes a SOAP response message transmitted from the Web service and returns the result to the CCS 38, which is the requesting source.

Further, the WSC 83 is constructed by the WEB page application 24, the SOAP communication application 25, the SF 27 (or, the SF 27 and the SF 28), and the WSF 26, which are described above with reference to FIG. 2.

The Web server 85 performs processes as a Web server of the PC 90. Specifically, the Web server 85 interprets a request in a Web protocol from a Web browser of the PC 90, and provides the response in the HTML. In a case where an application that operates as a client of the multi-functional apparatus 100 is installed in the PC 90, the Web server 85 interprets a request of the Web service (SOAP) and provides the response in the SOAP.

The user authentication Web service 92 performs authentication of a user at the request of the multi-functional apparatus 100. The user directory Web service 93 confirms usage limitation of a user at the request of the multi-functional apparatus 100. The user authentication Web service 92 and the user directory Web service 93 may be functions of the same server.

The SOAP (Simple Object Access Protocol) is used for communications between the multi-functional apparatus 100 and the user authentication Web service 92 and communications between the multi-functional apparatus 100 and the user directory Web service 93.

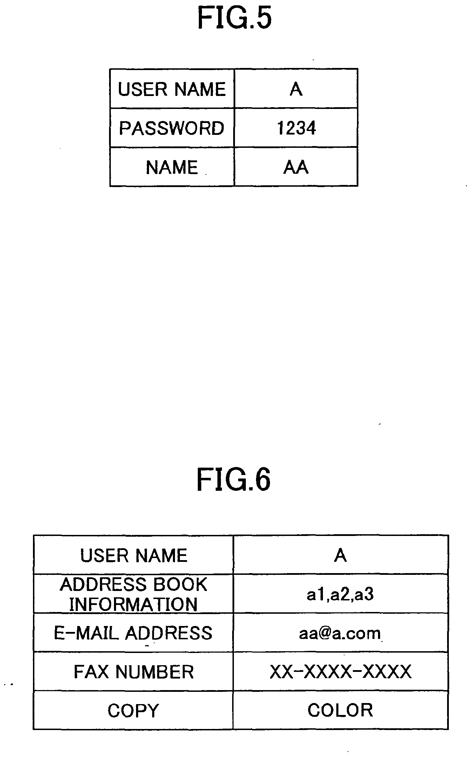

Next, referring to FIG. 5, a description is given below of an authentication database (hereinafter referred to as "the authentication DB") mounted in the user authentication Web service 92. The authentication DB is a database storing a user name, a password, and a name for each user. The user name and the password are used as a set for authentication. The name is used for, e.g., indicating a user, which is a transmitting source, on a FAX paper printed at a transmission destination when the user transmits a FAX.

In the case of FIG. 5, the user name is "A", the password is "1234", and the name is "AA".

Next, referring to FIG. 6, a description is given below of a directory database (hereinafter referred to as "the directory DB") provided in the user directory Web service 93. The directory DB is a database storing a user name, address book information, an e-mail address, a FAX number, and a copy for each user. The information stored in the directory DB corresponds to user related information.

The address book information is information including address information such as a transmission destination and a telephone number or an e-mail address thereof for each transmission destination. The e-mail address is an e-mail address of a user. The FAX number is a number serving as the address of a transmitting source when a user transmits a FAX. Copy is an image formation function that can be used by a user, and represents the kind of copy. For example, when the usage of copy by the user is limited to only color copy, "color" is written in the copy field. The kinds of copy include, for example, black and white copy and double-face copy, in addition to color copy.

In the case of FIG. 6, the user name is "A". The address information is "a1, a2, a3". The "a*" represents address information for one destination. Thus, the user having the user name "A" registers three kinds of address information.

In addition, the kind of copy that can be used by the user having the user name "A" is only color copy.

A description is given below of processes in the above-mentioned structure with reference to user interfaces and sequence diagrams.

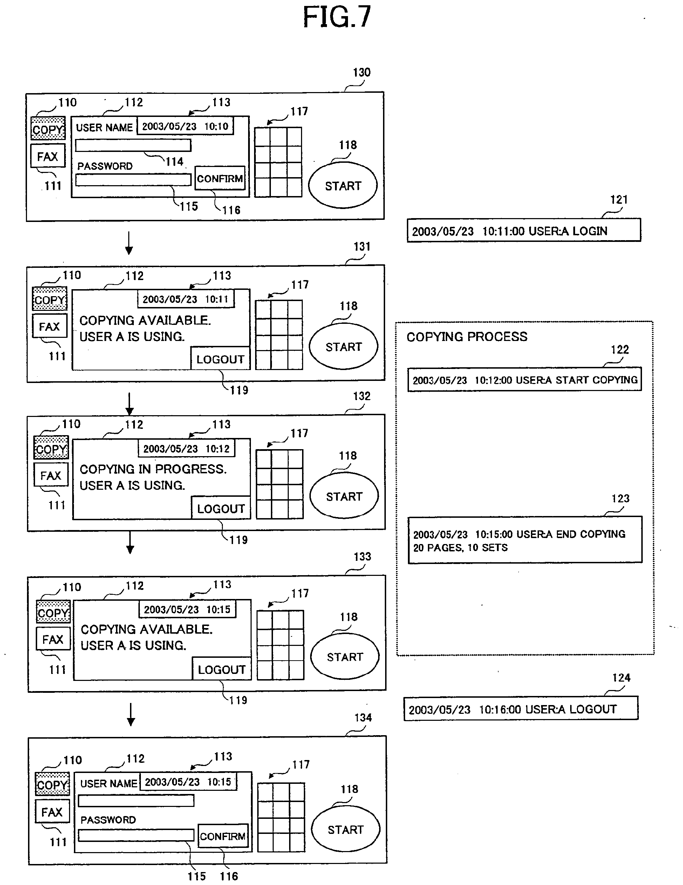

Referring to FIG. 7, a description is given of user interfaces. FIG. 7 shows transition of screens displayed on a display part of the operation panel 53 which transition is caused by operations of a user, and the contents of a log that are recorded at the time. Specifically, FIG. 7 shows transition of screens displayed on the display part of the operation panel 53 in a case where the user named A logs in, performs copying, and then logs out.

First, a description is given below of those parts that are in common among operation panels 130, 131, 132, 133 and 134. The operation panels 130, 131, 132, 133 and 134 each includes a copy button 110, a FAX button 111, a display part 112, numeric keys 117, and a start button 118. Also, the display part 112 is provided with a date and hour display part 113.

The copy button 110 and the FAX button 111 are pressed down at the time of copying and FAX transmission, respectively. When one of the copy button 110 and the FAX button 111 is pressed down, the pressed down button is indicated by hatching. The display part 112 is a part that shows a screen for a user. The numeric keys 117 are used when inputting a number such as the number of sheets to be copied. The start button 118 is a button that is pressed down when starting copying. The date and hour display part 113 displays the date and hour.

A description is given below of transition of the display part 112 in sequence, starting with the operation panel 130.

The operation panel 130 is a login screen. In the display part 112, a user name input field 114, a password input field 115, and a confirm button 116 are displayed. The user name and the password correspond to user authentication information. In addition, the user authentication information may include an authentication ticket and an authentication type, which are described later, and information that can specify an authentication party such as authentication set information and the IP address of an authentication Web service, which are described later.

The authentication type represents the type of authentication such as password authentication and ticket authentication. As for the kinds of authentication, there are internal authentication that performs authentication in a multi-functional apparatus that is set as authentication set information, which is described later, and external authentication that performs authentication by another authentication apparatus. Further, the kind of authentication may be a specific kind of authentication such as NT authentication and LDAP authentication.

The user name input field 114 is a field for inputting the user name of a user. The password input field 115 is a field for inputting the password of the user. The confirm button 116 is a button that is pressed down after inputting the user name and the password. In this case, the confirm button 116 is a login button.

When the user presses down the confirm button 116 and login succeeds, the date and hour, the user, and the fact that the user logged in are recorded in a log as shown in a log 121.

When the user logs in, the display part 112 of the operation panel 130 makes a transition to the display part 112 of the operation panel 131. In the display part 112 of the operation panel 131, the message "Copying available. User A is using." and a logout button 119 are displayed. With the message, it is specified that the multi-functional apparatus 100 can be used. The logout button 119 is a button that is to be pressed down when the user A logs out.

When copying is started in the above-mentioned state, the date and hour, the user name, and the fact that the user started copying is recorded in a log as shown in a log 122. In addition, the display part 112 of the operation panel 131 makes a transition to the display part 112 of the operation panel 132.

When copying ends, the display part 112 of the operation panel 132 makes a transition to the display part 112 of the operation panel 133. As shown in a log 123, the date and hour, the user name, the fact that copying is ended, the number of pages, and the number of sets are recorded in a log. In this case, when color copying is performed, the fact that color copying is performed is also displayed.

When copying ends and the user A presses down the logout button 119, the date and hour, the user name, and the fact that the user logged out are recorded in a log as shown in a log 124. Then, the display part 112 of the operation panel 133 makes a transition to the login screen as shown in the display part 112 of the operation panel 134.

In the above-mentioned login screen, instead of inputting the user name and the password, a magnetic card reader or an IC card reader may be provided in the multi-functional apparatus 100, and login may be performed by using a magnetic card or an IC card.

Next, a description is given below of processes related to the above-mentioned login with reference to sequence diagrams.

In the sequence diagrams described below, those characters written above an arrow represent, for example, a message, an event, or a function call represented by the arrow. Additionally, those characters put in brackets and written below an arrow represent a parameter to be passed. Further, these characters are omitted when it is unnecessary to particularly specify them. In addition, in the sequence diagrams, a Web service client is indicated as "WSC", the user authentication Web service is indicated as "authentication WS", and the user directory Web service is indicated as "user directory WS".

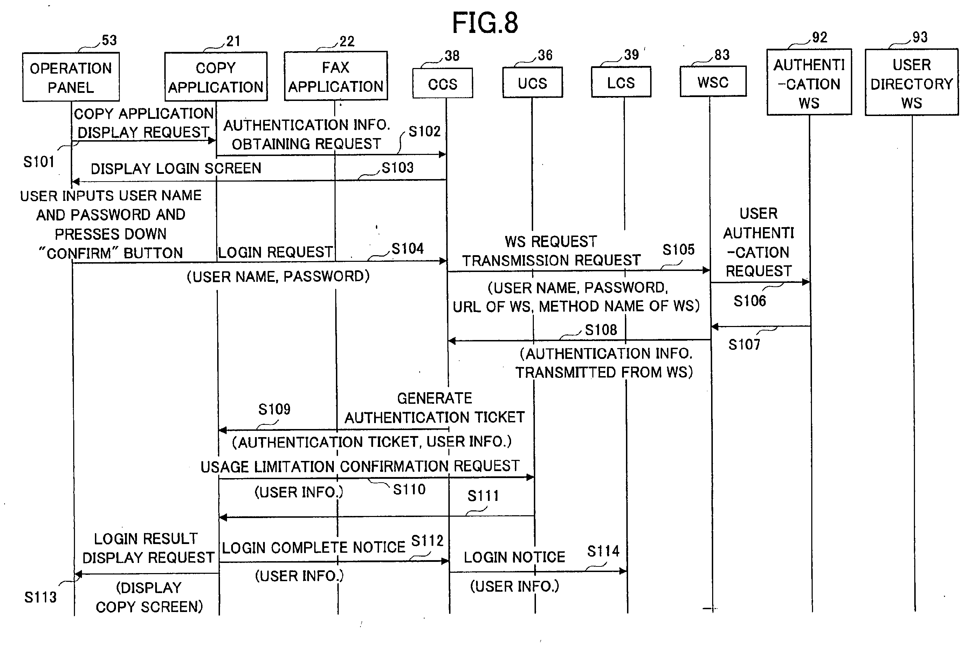

First, referring to the sequence diagram of FIG. 8, a description is given below of processes until a user logs in.

In step S101, a copy application display request is provided to the copy application 21 from the operation panel 53. In step S102, the copy application 21 notifies the CCS 38 of an authentication information obtaining request. The argument of the authentication information obtaining request is described later.

In step S103, the CCS 38 notifies the operation panel 53 to display the login screen. Step S103 corresponds to a user authentication information obtaining step.

When the user inputs the user name and the password and presses down the confirm button 116, the operation panel 53 notifies the CCS 38 in step S104 of a login request. In step S105, the CCS 38 notifies the WSC 83 of a WS request transmission request. On this occasion, the user name and the password that are input previously, the URL of the authentication WS 92, and a method name to be passed to the authentication WS 92 are also provided to the WSC 83.

In step S106, the WSC 83 notifies the authentication WS 92 of a user authentication request together with user authentication information. Step S107, corresponding to an authentication result obtaining step, is the response to step S106. The contents of the SOAP messages in steps S106 and S107 are described later.

In step S108, the WSC 83, which is notified of the response, notifies the CCS 38 of the authentication information transmitted from the authentication WS 92. The CCS 38 generates an authentication ticket. The authentication ticket includes the user name and is for associating the user name with user information stored in the CCS 38. The user information is information included in the user related information, and may include, for example, a department, an employee number, and a post in a company. In this case, for example, a user information database storing only information related to users may be provided.

In step S109, the generated authentication ticket is provided to the copy application 21 together with the user information. Then, in step S110, the copy application 21 notifies the UCS 36 of a usage limitation confirmation request together with the user information. In step S111, the response to the usage limitation confirmation request is provided. Step S110 corresponds to a user related information obtaining step. In addition, as can be appreciated from this process, the copy application 21 corresponds to user related information obtaining means.

It should be noted that the usage limitation confirmation request in step S110 is a request in the case where usage by a user is limited by the copy application 21. When usage is limited by the UCS 36, the application name as well as the user name are provided from the copy application 21. The application name is, for example, the copy application 21.

The copy application 21 determines that login is completed from the response in step S111, and notifies the CCS 38 in step S112 of completion of login together with the user information. In addition, in step S113, the copy application 21 sends the operation panel 53 a login result display request. On this occasion, a copy screen display request is also sent. Step S113 corresponds to an authentication result specifying step.

In step S114, the CCS 38 notifies the LSC 39 that the user has logged in together with the user information.

In the aforementioned manner, the processes related to login are performed. Next, a description is given below of the authentication information obtaining request in step S102, the WS request transmission request in step S105, the user authentication request in step S106, and the response in step S107 with respect to the user authentication request in step S106.

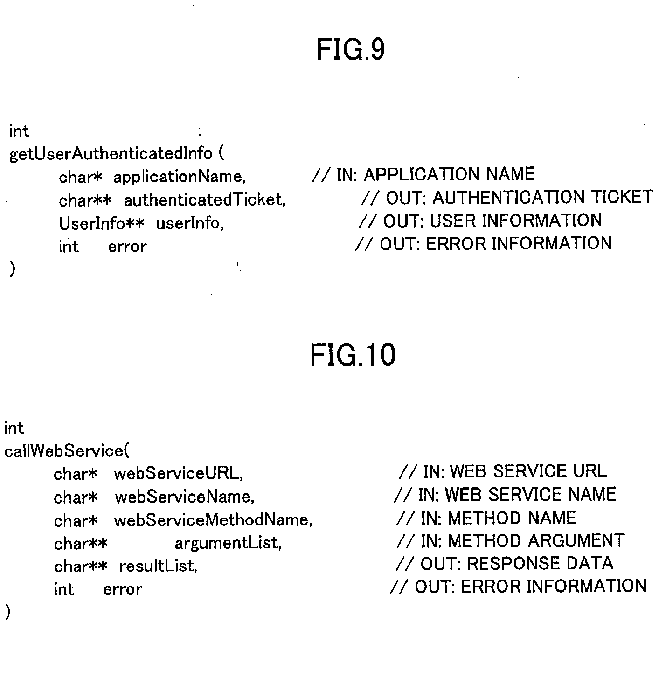

First, the authentication information obtaining request in step S102 is performed by a function call of the function shown in FIG. 9. The function shown in FIG. 9 is a function written in the C language or the C++ language, and has the function name "getUserAuthenticatedInfo". The return value of the function is a process result code, and the arguments of the function are the application name, the authentication ticket, the user information, and error information. It is possible for the copy application 21 to obtain the authentication ticket and the user information by the storing of information in the authentication ticket and the user information by the CCS 38.

It should be noted that the return value and the error information are of the int type, the application name is a char-type pointer, the authentication ticket is a char-type double pointer, the user information is a double pointer of a structure "UserInfo", and each of these is normally four bytes.

Next, a description is given below of the WS request transmission request in step S105. The WS request transmission request is performed by a function call of the function shown in FIG. 10. The function shown in FIG. 10 is a function written in the C language or the C++ language, and has the function name "callWebService". The return value of the function is a process result code, and the arguments of the function are the URL of the authentication WS, a Web service name, a method name, a method argument, response data, and the error information. It is possible for the copy application 21 to obtain the authentication information by the storing of information in the response data by the CCS 38.

It should be noted that the return value and the error information are of the int type, the URL of the authentication WS, the Web service name, the method name, and the method argument are char-type pointers, the response data and the error information are char-type double pointer, and each of these is normally four bytes.

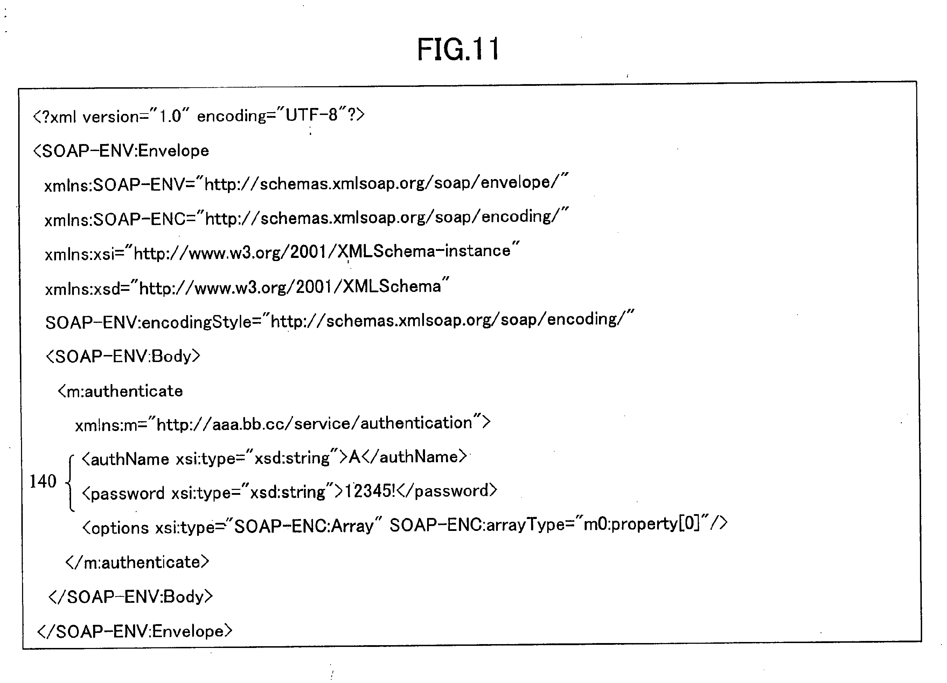

Next, a description is given below of the user authentication request in step S106. As shown in FIG. 11, the user authentication is written in the XML (Extensible Markup Language).

As shown in XML sentences 140, the fact that the user name is "A" is provided in the following format.

```
           <authName xsi:type="xsd:string">A</authName>
```

In addition, the password "12345!"is provided in the following format.

```
      <password xsi:type="xsd:string">12345!</password>
```

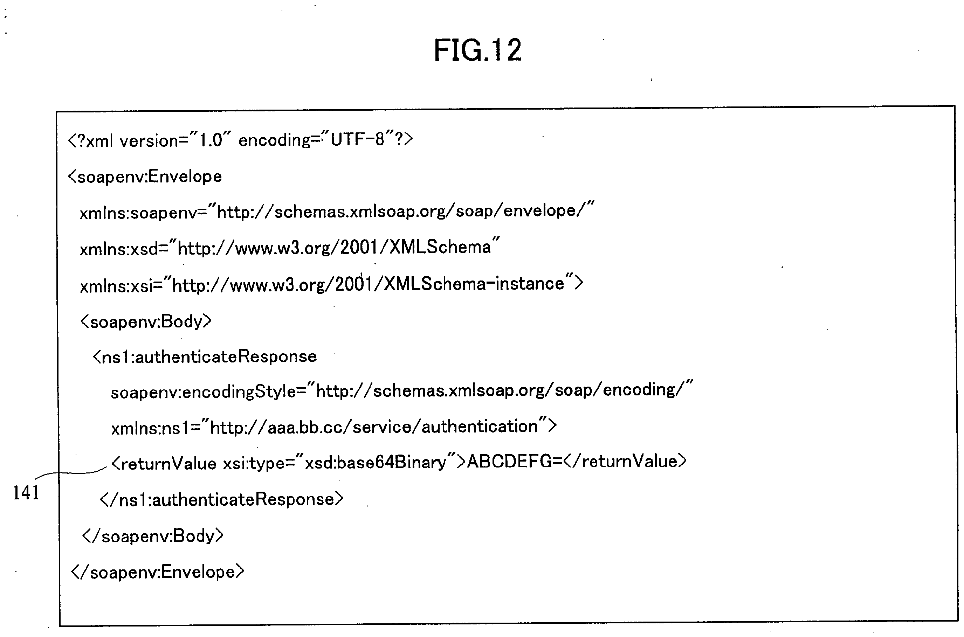

Next, a description is given below of the contents provided in step S107 as the response to the user authentication request. As shown in an XML sentence 141 in FIG. 12, the authentication information, which is the response, is indicated in the following format.

```
           <returnValue xsi:type="xsd:base64Binary">
           ABCDEFG=</returnValue>
```

The "ABCDEFG=" is an example, which indicates whether or not the user is authenticated.

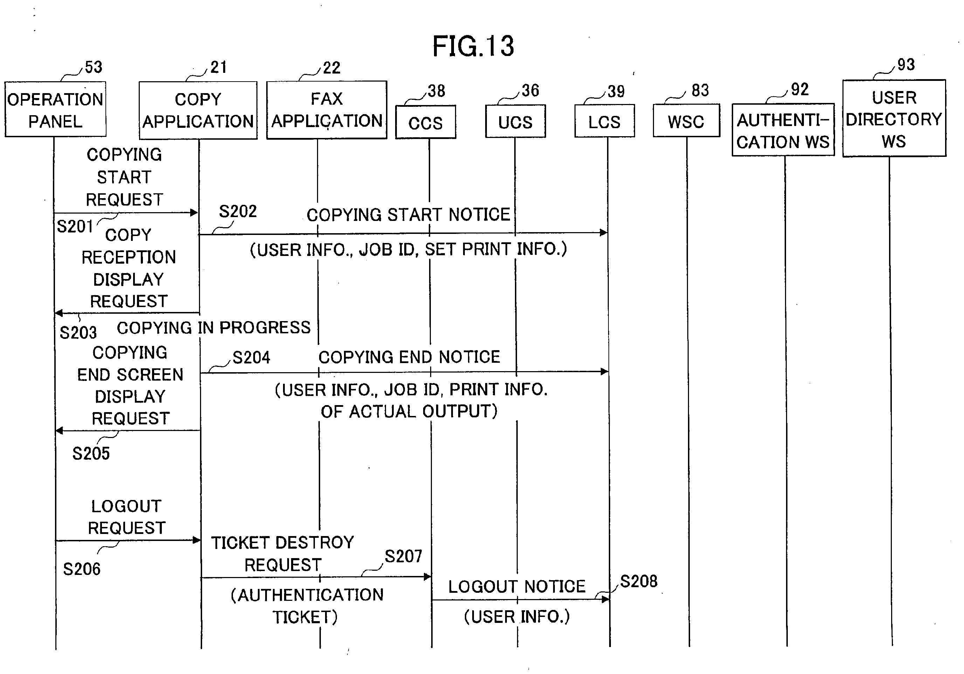

Next, referring to the sequence diagram of FIG. 13, a description is given below of processes in which the user who has logged in performs copying and logs out.

In step S201, the operation panel 53 notifies the copy application 21 of a copy start request.

In step S202, the copy application 21 notifies the LCS 39 of starting of copying. On this occasion, the user information, a job ID, and print information set by the user are also provided to the LCS 39. The set information is, for example, information related to printing such as color copying.

In step S203, the copy application 21 notifies the operation panel 53 of a copy reception screen display request. Thereby, copying is performed.

When copying ends, the copy application 21 notifies the LCS 39 in step S204 that the copying ends. On this occasion, the user information, the job ID, the print information of actual output are provided to the LCS 39. Additionally, in step S205, the copy application 21 notifies the operation panel 53 of a copying end screen display request.

Then, when the user presses down the logout button 119 (see FIG. 7), the operation panel 53 notifies the copy application 21 in step S206 of a logout request. In step S207, the copy application 21 notifies the CCS 38 of a ticket destroy request together with an authentication ticket. In step S208, the CCS 38 notifies the LCS 39 of a logout notice together with the user information, and the process ends.

In the aforementioned processes, the user who has logged in performs copying and logs out.

A description is given below of processes in the case where the user directory WS 93 is used in the aforementioned processes. The user directory WS 93 is used in the usage limitation confirmation request in step S110 of FIG. 8.

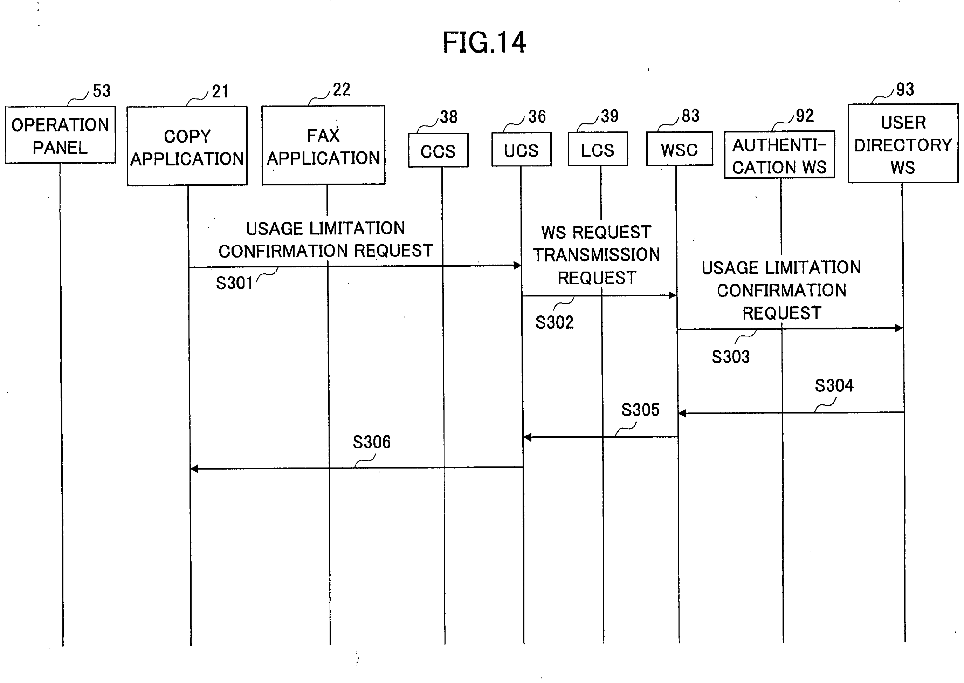

Referring to the sequence diagram of FIG. 14, a specific description is given of the processes in the above-mentioned case.

It should be noted that the sequence diagram of FIG. 14 only shows processes corresponding to steps S110 and S111 of FIG. 8, since the sequence diagram of FIG. 14 shows the processes in the case where the usage limitation confirmation request in step S110 of FIG. 8 is performed by using the user directory WS 93.

The sequence diagram of FIG. 14 is described below. In step S301, the copy application 21 notifies the UCS 36 of the usage limitation confirmation request. On this occasion, the user information and the application name are also provided to the UCS 36.

In step S302, the UCS 36 notifies the WSC 83 of the request transmission request. On this occasion, in a case where the usage limitation of the user is performed by the copy application 21 or the UCS 36, the user information, the URL of the user directory WS 93, and a method name of the WS are also provided to the WSC 83. Additionally, in a case where the usage limitation of the user is performed by the user directory WS 93, the user information, a machine name, the application name, the URL of the user directory WS 93, and a method name of the WS are provided to the WSC 83. Here, the machine name is information specifying the multi-functional apparatus 100, and may be the IP address of the multi-functional apparatus 100, for example.

In step S303, the WSC 83 notifies the user directory WS 93 of the usage limitation confirmation request. The usage limitation confirmation request is provided in a SOAP message. In a case where the usage limitation of the user is performed by the copy application 21 or the UCS 36, the information provided with the usage limitation confirmation request is the user information. Additionally, in a case where the usage limitation of the user is performed by the user directory WS 93, the information provided with the usage limitation confirmation request is the user information, the machine name, and the application name.

In step S304, the response to the usage limitation confirmation request in step S303 is provided to the WSC 83 in a SOAP message. In a case where the usage limitation of the user is performed by the copy application 21 or the UCS 36, the information provided in step S304 is the user information. Additionally, in a case where the usage limitation of the user is performed by the user directory WS 93, the information provided in step S304 is permission for execution by the user.

In step S305, the WSC 83 notifies the UCS 36 of the information transmitted from the user directory WS 93. In a case where the usage limitation of the user is performed by the copy application 21 or the UCS 36, the information provided in step S305 is the user information. Additionally, in a case where the usage limitation of the user is performed by the user directory WS 93, the information provided in step S305 is permission for execution by the user.

In step S306, the UCS 36 notifies the copy application 21 of the response to the usage limitation confirmation request in step S301. In a case where the usage limitation of the user is performed by the copy application 21, the information provided in step S306 is the user information. Additionally, in a case where the usage limitation of the user is performed by the UCS 36 or the user directory WS 93, the information provided in step S306 is permission for execution by the user.

In the aforementioned manner, the processes in the case where the user directory 93 is used are performed.

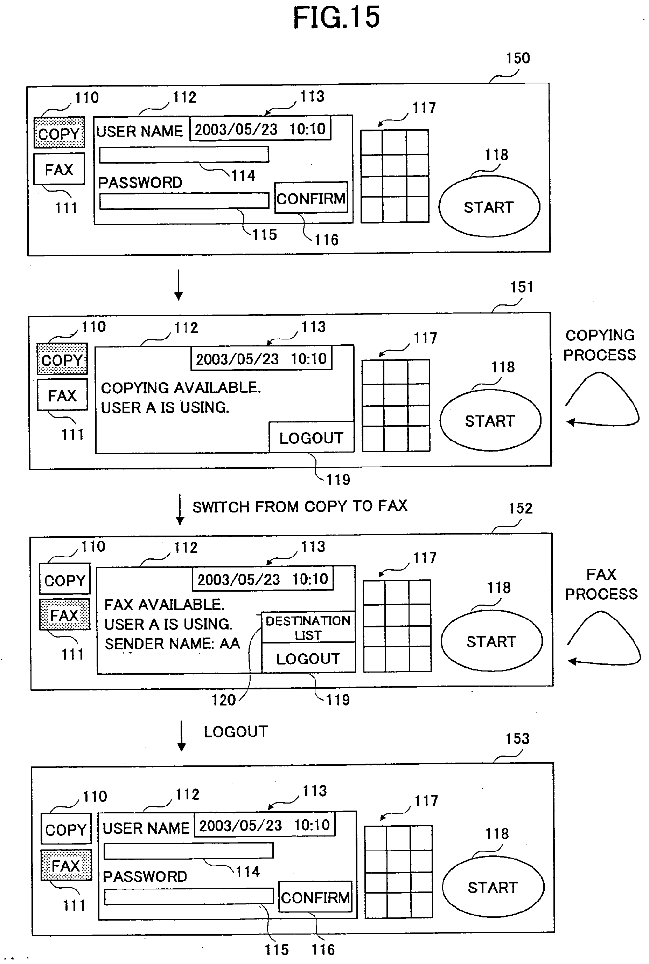

Next, a description is given below of processes in the case where the user does not log out after performing copying as mentioned above and subsequently uses the FAX function. The description is given with reference to interfaces (operation panels) 150 through 153 shown in FIG. 15. In FIG. 15, those parts that are the same as those corresponding parts in FIG. 7 are designated by the same reference numerals, and a description thereof is omitted.

First, the operation panel 150 is the login screen, which is described above with reference to FIG. 7. When the user logs in, the login screen makes a transition to a screen that allows copying as shown in the display part 112 of the operation panel 151. Thus, it is possible for the user to perform copying.

Then, when the user presses down the FAX button 111, the display part 112 of the operation panel 151 makes a transition to the display part 112 of the operation panel 152. In the display part 112 of the operation panel 152, a destination list button 120 for displaying the destinations of a FAX by a list is displayed.

In the display part 112 of the operation panel 152, when the user sends a FAX and presses down the logout button 119, the screen shown in the display part 112 of the operation panel 152 makes a transition to the login screen as shown in the display part 112 of the operation panel 153.

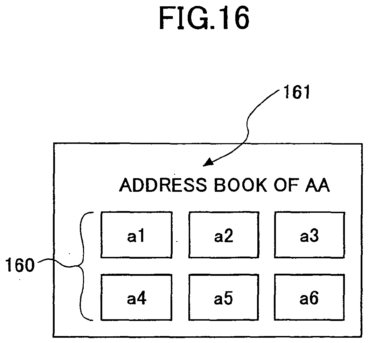

FIG. 16 shows a destination list screen, which is displayed when the destination list button 120 is pressed down. In the destination list screen, an address book name 161 and a group of destination selection buttons 160 are displayed. The address book name 161 represents whose address book the displayed destination list is based on. The group of destination selection buttons 160 are displayed based on the address book information (see FIG. 6). By selecting a destination selection button 160 to which the user desires to send a FAX from among the group of destination selection buttons 160, it is possible for the user to send a FAX to the corresponding destination.

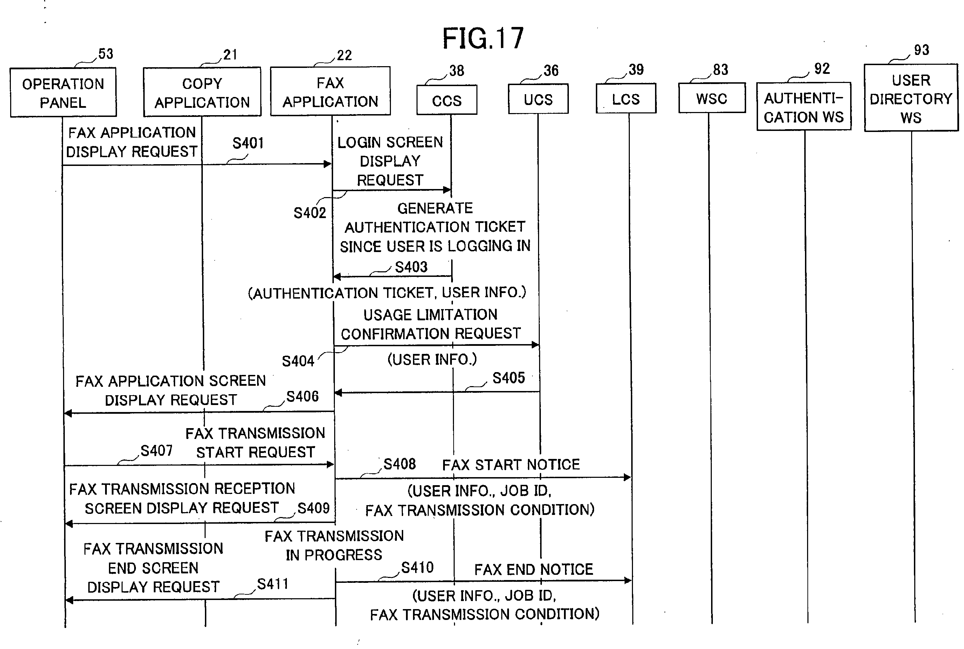

Next, referring to the sequence diagram of FIG. 17, a description is given below of the processes in the case where the user sends a FAX after copying as shown in FIG. 15.

In step S401, the operation panel 53 notifies the FAX application 22 of a FAX application display request. In step S402, the FAX application 22 notifies the CCS 38 of a login screen display request.

On this occasion, the CCS 38 generates an authentication ticket since the user is logging in. Then, in step S403, the CCS 38 notifies the FAX application 22 of the authentication ticket and user information.

In step S404, the FAX application 22 notifies the UCS 36 of a usage limitation confirmation request together with the user information. The response to the usage limitation confirmation request is provided to the FAX application 22 in step S405. When the FAX function is available, the EAX application 22 notifies the operation panel 53 in step S406 of a FAX application screen display request.

When the user starts using the FAX function, the operation panel 53 notifies the FAX application 22 in step S407 of a FAX transmission request. In step S408, the FAX application 22 notifies the LCS 39 that FAX transmission is started. On this occasion, the user information, a job ID, and a FAX transmission condition are also provided to the LCS 39. The FAX transmission condition is a condition related to transmission of a FAX, such as a destination.

In step S409, the FAX application 22 notifies the operation panel 53 of a FAX transmission reception screen display request. When the FAX transmission ends, the FAX application 22 notifies the LCS 39 in step S410 that the FAX transmission ends. On this occasion, the user information, the job ID, and the FAX transmission condition are also provided to the LCS 39.

In step S411, the FAX application 22 notifies the operation panel 53 of a FAX transmission end screen display request, and the process ends.

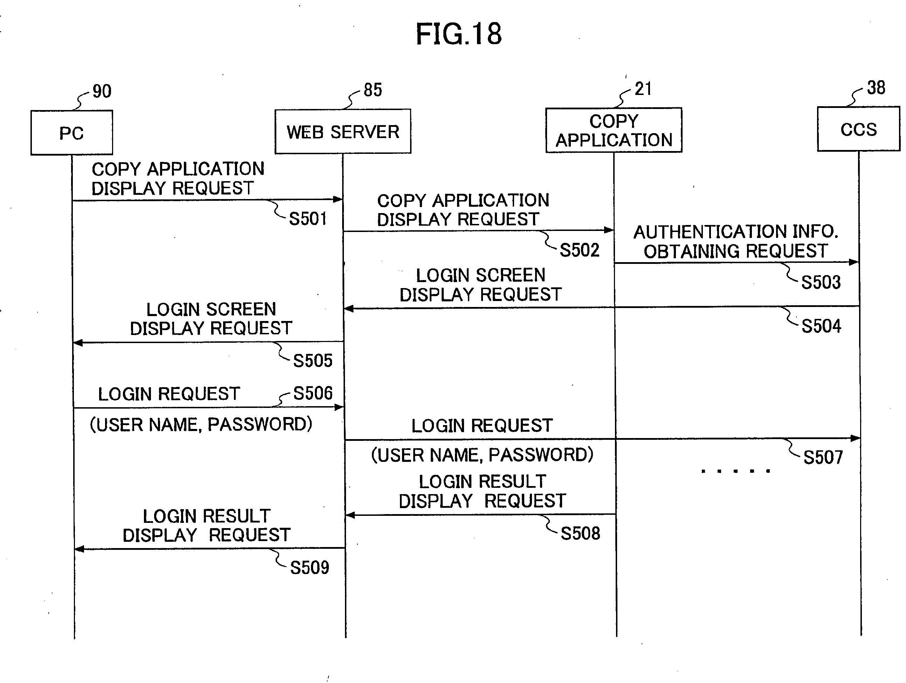

The login processes and the FAX transmission processes described above are all performed in the multi-functional apparatus 100. The login processes described below with reference to FIG. 18 are processes in which the user logs in from a PC.

FIG. 18 shows processes performed among the PC 90, the Web server 85 (see FIG. 4), the copy application 21, and the CCS 38.

In step S501, the PC 90 notifies the Web server 85 of a copy application display request. In step S502, the Web server 85 notifies the copy application 21 of the copy application display request. In step S503, the copy application 21 notifies the CCS 38 of an authentication information obtaining request.

In step S504, the CCS 38 notifies the Web server 85 of a login screen display request. In step S505, the Web server 85 notifies the PC 90 of the login screen display request.

When the user inputs the user name and the password, and presses down, for example, a confirm button displayed on the PC 90, the PC 90 notifies the Web server 85 in step S506 of a login request. On this occasion, the user name and the password are also notified to the Web server 85.

Subsequently, the processes of steps S105 through S112 and the process of step S114, which are described above with reference to FIG. 8, are performed.

In step S508, the copy application 21 notifies the Web server 85 of a login result display request. In step S509, the Web server 85 notifies the PC 90 of the login result display request.

The authentication in the above-mentioned processes is password authentication. It is also possible to perform authentication by ticket authentication instead of password authentication. In ticket authentication, a ticket for authentication is obtained by connecting a PC to an authentication WS, and login to a multi-functional apparatus is performed by using the ticket.

A description is given below of the contents provided to the PC and the multi-functional apparatus in ticket authentication.

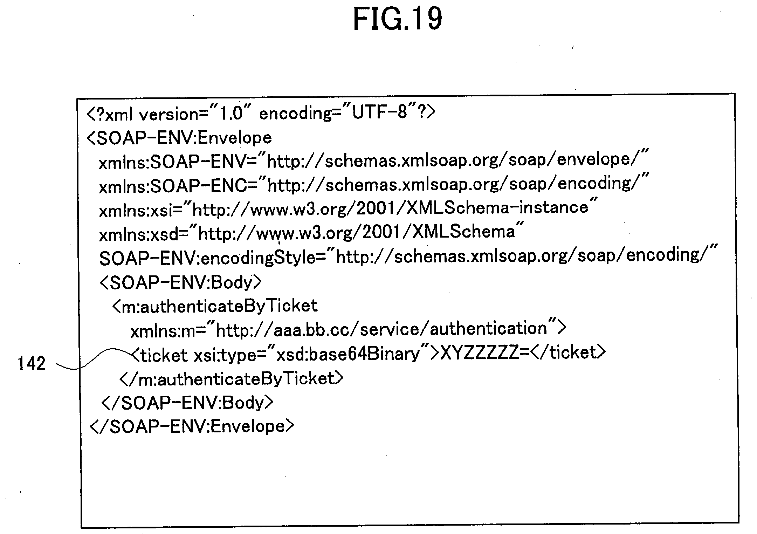

FIG. 19 is a diagram showing the contents of a user authentication request in ticket authentication. As represented by an XML sentence 142 of FIG. 19, a ticket "XYZZZZZ=" is provided in the following format.

```
           <ticket xsi:type="xsd:base64Binary">
           XYZZZZZ=</ticket>
```

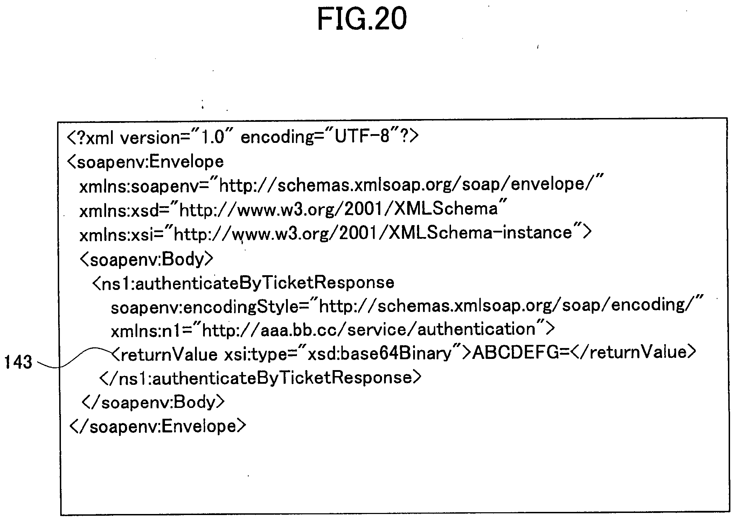

In addition, FIG. 20 shows the contents of a user authentication response in ticket authentication. As represented by a XML sentence 143 of FIG. 20, a response "ABCDEFG=" is provided in the following format.

```
           <returnValue xsi:type="xsd:base64Binary">
           ABCDEFG=</returnValue >
```

Next, a description is given below of settings related to authentication.

The authentication DB and the directory DB described above with reference to FIGS. 5 and 6 are not necessarily provided in the authentication WS and the user directory WS, respectively, and may be provided in a multi-functional apparatus.

By providing the authentication DB and the directory DB in a multi-functional apparatus, it is possible to save in the DBs provided therein information related to, for example, a temporary user who uses the same multi-functional apparatus only for a week. Hence, it is possible to avoid unnecessary updating of the authentication DB provided in the authentication WS or the directory DB provided in the user directory WS, which is used by a lot of multi-functional apparatuses.

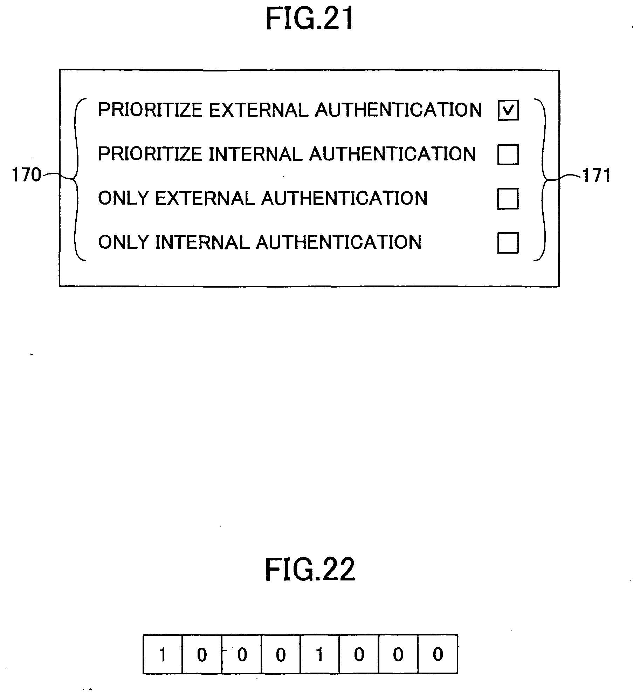

In a case where the authentication DB and the directory DB are provided in a multi-function apparatus as mentioned above, it is possible to set which DB is to be used. FIG. 21 shows an authentication set screen for setting of authentication. The authentication set screen includes set items 170 and check boxes 171.

The set items 170 include "prioritize external authentication", "prioritize internal authentication", "only external authentication" and "only internal authentication". The "external authentication" represents authentication in the authentication WS. The "internal authentication" represents authentication by using the authentication DB provided in a multi-functional apparatus used by a user. "Prioritize" means that authentication is performed by prioritized authentication, but when the prioritized authentication cannot be used, authentication is performed by the other authentication. "Only" means authentication is performed by only one of the internal authentication and the external authentication.

The user can perform setting of authentication by checking the one of the check boxes 171 corresponding to a set item selected among the four set items 170.

Further, when setting a user directory, a set screen obtained by replacing "authentication" with "user directory" in the screen of FIG. 21 is displayed.

The contents of authentication setting thus set are saved in a bit field shown in FIG. 22. The bit field shown in FIG. 22 is a bit sequence of 8 bits: the lowest bit through fourth bit are used for authentication setting, and the fifth bit through the eighth bit are used for saving a user directory. Each bit corresponds to the above-mentioned eight set items, and the value of the bit corresponding to the checked set item is "1".

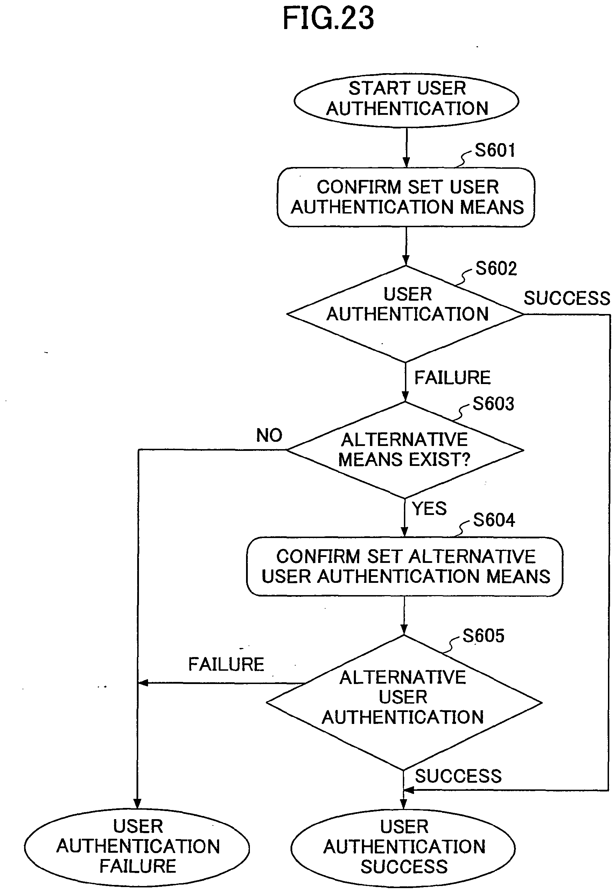

By using the bit field, a multi-functional apparatus determines which DB is to be used and performs authentication. This process is described below with reference to the flowchart of FIG. 23.

It is assumed that user authentication information, the authentication type, the kind of authentication means, and information specifying authentication means (authentication means specifying information) are already obtained before the processes shown in the flowchart of FIG. 23. Among these, the kind of authentication means represents the above-mentioned authentication setting and, specifically, NT authentication or LDAP authentication, for example, may be specified.

In step S601, confirmation of the user authentication means, which is set by using the above-mentioned bit field, is performed. Step S601 corresponds to an authentication party determination step. In step S602, whether user authentication succeeds is determined. Step S602 corresponds to an authentication step. When it is determined that user authentication succeeds (SUCCESS in step S602), the process ends. When it is determined that user authentication fails (FAILURE in step S602), it is determined in step S603 by using the bit field whether there is alternative means. Step S603 corresponds to an alternative authentication determination step.

When the setting of the bit field is "only external authentication" or "only internal authentication", it is determined that there is no alternative means (NO in step S603) and the process ends assuming that authentication fails.

When it is determined that there is alternative means (YES in step S603), the set alternative user authentication means is confirmed in step S604. In step S605, it is determined whether alternative user authentication succeeds or fails. When the alternative user authentication succeeds (SUCCESS in step S605), the process ends assuming that the user authentication succeeds. When the alternative user authentication fails (FAILURE in step S605), the process ends assuming that the user authentication fails.

Here, a description is given of steps S602 and S605. In addition to the case where user authentication fails, which is an original failure, the cases where it is determined that authentication fails include, for example: the case where the user identification information and/or the authentication type cannot be handled by an authentication party; the case where the authentication means is different from that specified in the authentication means specifying information; and the case where the system of an authentication party is busy.

The present invention is not limited to the specifically disclosed embodiments, and variations and modifications may be made without departing from the scope of the present invention.

## Claims

1. A user authentication method for an image forming apparatus (100) connectable via a network to an authentication apparatus (92) that performs authentication of a user, said user authentication method comprising:
a user authentication information obtaining step (S103) of obtaining user authentication information for performing the authentication of the user;
an authentication party determination step (S601) of determining the authentication apparatus (92) or the image forming apparatus (100) as an authentication party, thereby determining whether to perform the authentication of the user in the authentication apparatus (92) or to perform the authentication of the user in the image forming apparatus (100), based on authentication set information indicating whether to perform the authentication of the user in said authentication apparatus or to perform the authentication of the user in said image forming apparatus;
an authentication step (S602) of performing the authentication of the user in the authentication party determined in the authentication party determination step (S601) by using the user authentication information;
a first image forming step (S201) of performing a first image forming function in the image forming apparatus (100) after it is determined that the authentication performed in the authentication party succeeded, and subsequently a second image forming step (S407) of performing a second image forming function in the image forming apparatus (100) without an additional user authentication information obtaining step.

2. The user authentication method as claimed in claim 1, further comprising:
a displaying step (S107) of displaying, a result of the authentication of the user in the authentication step (S602) performed by the authentication party determined in the authentication party determination step (S601), on a display part (112) of the image forming apparatus (100).

3. The user authentication method as claimed in claim 2, wherein the displaying step (S107) includes displaying a user name of the user successfully authenticated by the authentication step (S602), on a screen of the display part (112) of the image forming apparatus (100).

4. The user authentication method as claimed in claim 2 or 3, wherein the displaying step (S107) includes displaying a plurality of functions, including the first image forming function and the second image forming function, available to the user successfully authenticated by the authentication step (S602), on a screen of the display part (112) of the image forming apparatus (100).

5. The user authentication method as claimed in any of claims 1 to 4, wherein the user authentication information obtaining step (S103) obtains the user authentication information including a user ID and a password that are input by the user from an operation panel (130).

6. The user authentication method as claimed in any of claims 1 to 5, wherein the user authentication information obtaining step (S103) obtains the user authentication information read from an IC card or a magnetic card by a card reader.

7. The user authentication method as claimed in any one of claims 1 to 6, further comprising:
a step of displaying, an address book of the user successfully authenticated by the authentication step (S602), on a screen of a display part (112) of the image forming apparatus (100).

8. The user authentication method as claimed in any of claims 1 to 7, wherein the image forming apparatus (100) is configured to include a database storing user authentication information different from user authentication information stored in a database included in the authentication apparatus (92) .

9. The user authentication method as claimed in any of claims 1 to 8, wherein
the authentication set information is input by the user from an authentication set screen, and
the authentication set screen includes a first set item indicating an external authentication performed by the authentication apparatus (92), and a second set item indicating an internal authentication performed by the image forming apparatus (100).

10. The user authentication method as claimed in any of claims 1 to 9, wherein the first image forming function performed in the first image forming step is a copy function, and the second image forming function performed in the second image forming step is a fax function after performing the copy function without performing an additional user authentication information obtaining step.

11. The user authentication method as claimed in any of claims 1 to 10, wherein the authentication party determination step (S601) is of determining the authentication apparatus (92) or the image forming apparatus (100) as authentication means for the authentication of the user.

12. An image forming apparatus (100) connectable via a network to an authentication apparatus (92) that performs authentication of a user, said image forming apparatus comprising:
a user authentication information obtaining means (53; S103) for obtaining user authentication information for performing the authentication of the user;
an authentication party determination means (38; S601) for determining the authentication apparatus (92) or the image forming apparatus (100) as an authentication party, thereby determining whether to perform the authentication of the user in the authentication apparatus (92) or to perform the authentication of the user in the image forming apparatus (100), based on authentication set information indicating whether to perform the authentication of the user in said authentication apparatus or to perform the authentication of the user in said image forming apparatus;
an authentication means (38; S602) for performing the authentication of the user in the authentication party determined by the authentication party determination means (38; S601) by using the user authentication information; and
a function performing means (4; 21, 22, 40; S201, S407) for performing a first image forming function in the image forming apparatus (100) after it is determined that the authentication performed in the authentication party succeeded, and subsequently performing a second image forming function in the image forming apparatus (100) without the user authentication information obtaining means (53; S103) obtaining additional user authentication information.

13. The image forming apparatus (100) as claimed in claim 12, further comprising:
an operation panel (130, 112; S107) for displaying, on a screen, a plurality of functions, including the first image forming function and the second image forming function, available to the user after the successful authentication of the user controlled by the authentication means (38; S602),
wherein the function performing means (4; 21, 22, 40; S201, S407) performs each of the plurality of functions of the image forming apparatus (100) selected by the user on the screen after one successful authentication of the user controlled by the authentication means (38; S602).

14. The image forming apparatus (100) as claimed in claim 12, wherein, in a case where the authentication party determination means (38; S601) determines the image forming apparatus (100) as the authentication party, the authentication means (38; S602) performs the authentication of the user in the image forming apparatus (100).

15. The image forming apparatus (100) as claimed in claim 12, wherein, in a case where the authentication party determination means (38; S601) determines the authentication apparatus (92) as the authentication party, the authentication apparatus (92) performs the authentication of the user, and the image forming apparatus (100) obtains a result of the authentication performed in the authentication apparatus (92).

16. A user authentication program which, when executed by a computer, causes the computer to carry out a user authentication process to be implemented in an image forming apparatus (100) that is connectable via a network to an authentication apparatus (92) that performs authentication of a user, said user authentication process comprising:
a user authentication information obtaining step (S103) of obtaining user authentication information for performing the authentication of the user;
an authentication party determination step (S601) of determining the authentication apparatus (92) or the image forming apparatus (100) as an authentication party, thereby determining whether to perform the authentication of the user in the authentication apparatus (92) or to perform the authentication of the user in the image forming apparatus (100), based on authentication set information indicating whether to perform the authentication of the user in said authentication apparatus or to perform the authentication of the user in said image forming apparatus;
an authentication step (S602) of performing the authentication of the user in the authentication party determined in the authentication party determination step (S601) by using the user authentication information;
a first image forming step (S201) of performing a first image forming function in the image forming apparatus (100) after it is determined that the authentication performed in the authentication party succeeded, and subsequently a second image forming step (S407) of performing a second image forming function in the image forming apparatus (100) without an additional user authentication information obtaining step.

17. The user authentication program as claimed in claim 16, wherein:
in a case where the authentication party determination step (S601) determines the image forming apparatus (100) as the authentication party, the authentication step (S602) performs the authentication of the user in the image forming apparatus (100).

18. The user authentication program as claimed in claim 16, wherein:
in a case where the authentication party determination step (S601) determines the authentication apparatus (92) as the authentication party, the authentication apparatus (92) performs the authentication of the user, and the image forming apparatus (100) obtains a result of the authentication performed in the authentication apparatus (92) .

19. A computer program product comprising a computer-readable medium storing the user authentication program according to any of claims 16 to 18.

## Patentansprüche

1. Benutzerauthentifizierungsverfahren für eine Bilderzeugungsvorrichtung (100), die über ein Netzwerk mit einer Authentifizierungsvorrichtung (92) verbunden werden kann, die eine Authentifizierung eines Benutzers ausführt, das Benutzerauthentifizierungsverfahren umfassend:
einen Benutzerauthentifizierungsinformation-Erlangungsschritt (S103) zum Erlangen von Benutzerauthentifizierungsinformationen zum Ausführen der Authentifizierung des Benutzers;
einen Authentifizierungsstelle-Bestimmungsschritt (S601) zum Bestimmen der Authentifizierungsvorrichtung (92) oder der Bilderzeugungsvorrichtung (100) als Authentifizierungsstelle, wodurch bestimmt wird, ob die Authentifizierung des Benutzers in der Authentifizierungsvorrichtung (92) oder die Authentifizierung des Benutzers in der Bilderzeugungsvorrichtung (100) ausgeführt werden soll, basierend auf Authentifizierungssatzinformationen, die angeben, ob die Authentifizierung des Benutzers in der Authentifizierungsvorrichtung ausgeführt werden soll, oder die Authentifizierung des Benutzers in der Bilderzeugungsvorrichtung ausgeführt werden soll;
einen Authentifizierungsschritt (S602) zum Ausführen der Authentifizierung des Benutzers in der Authentifizierungsstelle, die in dem Authentifizierungsstellen-Bestimmungsschritt (S601) unter Verwendung der Benutzerauthentifizierungsinformationen bestimmt wird;
einen ersten Bilderzeugungsschritt (S201) zum Ausführen einer ersten Bilderzeugungsfunktion in der Bilderzeugungsvorrichtung (100), nachdem bestimmt wurde, dass die in der Authentifizierungsstelle ausgeführte Authentifizierung erfolgreich war, und anschließend einen zweiten Bilderzeugungsschritt (S407) zum Ausführen einer zweiten Bilderzeugungsfunktion in der Bilderzeugungsvorrichtung (100) ohne einen zusätzlichen Benutzerauthentifizierungsinformation-Erlangungsschritt .

2. Benutzerauthentifizierungsverfahren nach Anspruch 1, ferner umfassend:
einen Anzeigeschritt (S107) zum Anzeigen eines Resultats der Authentifizierung des Benutzers in dem Authentifizierungsschritt (S602), der von der Authentifizierungsstelle ausgeführt wird, die in dem Authentifizierungsstellen-Bestimmungsschritt (S601) bestimmt wird, auf einem Anzeigeteil (112) der Bilderzeugungsvorrichtung (100).

3. Benutzerauthentifizierungsverfahren nach Anspruch 2, wobei der Anzeigeschritt (S107) ein Anzeigen eines Benutzernamens des durch den Authentifizierungsschritt (S602) erfolgreich authentifizierten Benutzers auf einem Bildschirm des Anzeigeteils (112) der Bilderzeugungsvorrichtung (100) beinhaltet.

4. Benutzerauthentifizierungsverfahren nach Anspruch 2 oder 3, wobei der Anzeigeschritt (S107) ein Anzeigen einer Vielzahl von Funktionen, einschließlich der ersten Bilderzeugungsfunktion und der zweiten Bilderzeugungsfunktion, die dem Benutzer verfügbar sind, der durch den Authentifizierungsschritt (S602) erfolgreich authentifiziert wird, auf einem Bildschirm des Anzeigeteils (112) der Bilderzeugungsvorrichtung (100) beinhaltet.

5. Benutzerauthentifizierungsverfahren nach einem der Ansprüche 1 bis 4, wobei der Benutzerauthentifizierungsinformation-Erlangungsschritt (S103) die Benutzerauthentifizierungsinformationen einschließlich einer Benutzer-ID und eines Passworts erlangt, die von dem Benutzer über ein Bedienfeld (130) eingegeben werden.

6. Benutzerauthentifizierungsverfahren nach einem der Ansprüche 1 bis 5, wobei der Benutzerauthentifizierungsinformation-Erlangungsschritt (S103) die Benutzerauthentifizierungsinformationen erlangt, die durch ein Kartenlesegerät von einer IC-Karte oder einer Magnetkarte gelesen werden.

7. Benutzerauthentifizierungsverfahren nach einem der Ansprüche 1 bis 6, ferner umfassend:
einen Schritt zum Anzeigen eines Adressbuchs des Benutzers, der durch den Authentifizierungsschritt (S602) erfolgreich authentifiziert wurde, auf einem Bildschirm eines Anzeigeteils (112) der Bilderzeugungsvorrichtung (100).

8. Benutzerauthentifizierungsverfahren nach einem der Ansprüche 1 bis 7, wobei die Bilderzeugungsvorrichtung (100) konfiguriert ist, um eine Datenbank zu beinhalten, die Benutzerauthentifizierungsinformationen speichert, die sich von Benutzerauthentifizierungsinformationen unterscheiden, die in einer Datenbank gespeichert sind, die in der Authentifizierungsvorrichtung (92) enthalten ist.

9. Benutzerauthentifizierungsverfahren nach einem der Ansprüche 1 bis 8, wobei
die Authentifizierungssatzinformationen von dem Benutzer an einem Authentifizierungssatzbildschirm eingegeben werden, und
der Authentifizierungssatzbildschirm ein erstes Satzelement beinhaltet, das eine externe Authentifizierung angibt, die von der Authentifizierungsvorrichtung (92) ausgeführt wird, und ein zweites Satzelement, das eine interne Authentifizierung angibt, die von der Bilderzeugungsvorrichtung (100) ausgeführt wird.

10. Benutzerauthentifizierungsverfahren nach einem der Ansprüche 1 bis 9, wobei die erste Bilderzeugungsfunktion, die in dem ersten Bilderzeugungsschritt ausgeführt wird, eine Kopierfunktion ist, und die zweite Bilderzeugungsfunktion, die in dem zweiten Bilderzeugungsschritt ausgeführt wird, eine Faxfunktion nach Ausführen der Kopierfunktion ist, ohne einen zusätzlichen Benutzerauthentifizierungsinformation-Erlangungsschritt auszuführen.

11. Benutzerauthentifizierungsverfahren nach einem der Ansprüche 1 bis 10, wobei der Authentifizierungsstelle-Bestimmungsschritt (S601) zum Bestimmen der Authentifizierungsvorrichtung (92) oder der Bilderzeugungsvorrichtung (100) als Authentifizierungseinrichtung für die Authentifizierung des Benutzers ist.

12. Bilderzeugungsvorrichtung (100), die über ein Netzwerk mit einer Authentifizierungsvorrichtung (92) verbunden werden kann, die eine Authentifizierung eines Benutzers ausführt, die Bilderzeugungsvorrichtung umfassend:
ein Benutzerauthentifizierungsinformation-Erlangungsmittel (53; S103) zum Erlangen von Benutzerauthentifizierungsinformationen zum Ausführen der Authentifizierung des Benutzers;
eine Authentifizierungsstellen-Bestimmungseinrichtung (38; S601) zum Bestimmen der Authentifizierungsvorrichtung (92) oder der Bilderzeugungsvorrichtung (100) als Authentifizierungsstelle, wodurch bestimmt wird, ob die Authentifizierung des Benutzers in der Authentifizierungsvorrichtung (92) oder die Authentifizierung des Benutzers in der Bilderzeugungsvorrichtung (100) ausgeführt werden soll, basierend auf Authentifizierungssatzinformationen, die angeben, ob die Authentifizierung des Benutzers in der Authentifizierungsvorrichtung ausgeführt werden soll, oder die Authentifizierung des Benutzers in der Bilderzeugungsvorrichtung ausgeführt werden soll;
eine Authentifizierungseinrichtung (38; S602) zum Ausführen der Authentifizierung des Benutzers in der Authentifizierungsstelle, die durch die Authentifizierungsstellen-Bestimmungseinrichtung (38; S601) unter Verwendung der Benutzerauthentifizierungsinformationen bestimmt wird; und eine Funktionsausführungseinrichtung (4; 21, 22, 40; S201, S407) zum Ausführen einer ersten Bilderzeugungsfunktion in der Bilderzeugungsvorrichtung (100), nachdem bestimmt wurde, dass die in der Authentifizierungsstelle ausgeführte Authentifizierung erfolgreich war, und zum anschließenden Ausführen einer zweiten Bilderzeugungsfunktion 30 in der Bilderzeugungsvorrichtung (100), ohne dass die Benutzerauthentifizierungsinformation-Erlangungseinrichtung (53; S103) zusätzliche Benutzerauthentifizierungsinformationen erlangt.

13. Bilderzeugungsvorrichtung (100) nach Anspruch 12, ferner umfassend:
ein Bedienfeld (130, 112; S107) zum Anzeigen einer Vielzahl von Funktionen auf einem Bildschirm, einschließlich der ersten Bilderzeugungsfunktion und der zweiten Bilderzeugungsfunktion,
die dem Benutzer nach der erfolgreichen Authentifizierung des Benutzers, kontrolliert durch die Authentifizierungseinrichtung (38; S602), verfügbar ist,
wobei die Funktionsausführungseinrichtung (4; 21, 22, 40; S201, S407) jede der Vielzahl von Funktionen der Bilderzeugungsvorrichtung (100) ausführt, die von dem Benutzer auf dem Bildschirm nach einer erfolgreichen Authentifizierung des Benutzers, kontrolliert durch die Authentifizierungsmittel (38; S602), ausgewählt wird.

14. Bilderzeugungsvorrichtung (100) nach Anspruch 12, wobei in einem Fall, in dem die Authentifizierungsstellen-Bestimmungseinrichtung (38; S601) die Bilderzeugungsvorrichtung (100) als Authentifizierungsstelle bestimmt, die Authentifizierungseinrichtung (38; S602) die Authentifizierung des Benutzers in der Bilderzeugungsvorrichtung (100) ausführt.

15. Bilderzeugungsvorrichtung (100) nach Anspruch 12, wobei in einem Fall, in dem die Authentifizierungsstellen-Bestimmungseinrichtung (38; S601) die Authentifizierungsvorrichtung (92) als Authentifizierungsstelle bestimmt, die Authentifizierungsvorrichtung (92) die Authentifizierung des Benutzers ausführt und die Bilderzeugungsvorrichtung (100) ein Resultat der Authentifizierung erlangt, die in der Authentifizierungsvorrichtung (92) ausgeführt wird.

16. Benutzerauthentifizierungsprogramm, das, wenn es von einem Computer ausgeführt wird, bewirkt, dass der Computer einen Benutzerauthentifizierungsvorgang ausführt, der in einer Bilderzeugungsvorrichtung (100) implementiert werden soll, die über ein Netzwerk mit einer Authentifizierungsvorrichtung (92) verbindbar ist, die eine Authentifizierung eines Benutzers ausführt, der Benutzerauthentifizierungsvorgang umfassend:
einen Benutzerauthentifizierungsinformation-Erlangungsschritt (S103) zum Erlangen von Benutzerauthentifizierungsinformationen zum Ausführen der Authentifizierung des Benutzers;
einen Authentifizierungsstelle-Bestimmungsschritt (S601) zum Bestimmen der Authentifizierungsvorrichtung (92) oder der Bilderzeugungsvorrichtung (100) als Authentifizierungsstelle, wodurch bestimmt wird, ob die Authentifizierung des Benutzers in der Authentifizierungsvorrichtung (92) oder die Authentifizierung des Benutzers in der Bilderzeugungsvorrichtung (100) ausgeführt werden soll, basierend auf Authentifizierungssatzinformationen, die angeben, ob die Authentifizierung des Benutzers in der Authentifizierungsvorrichtung ausgeführt werden soll, oder die Authentifizierung des Benutzers in der Bilderzeugungsvorrichtung ausgeführt werden soll;
einen Authentifizierungsschritt (S602) zum Ausführen der Authentifizierung des Benutzers in der Authentifizierungsstelle, die in dem Authentifizierungsstellen-Bestimmungsschritt (S601) unter Verwendung der Benutzerauthentifizierungsinformationen bestimmt wird;
einen ersten Bilderzeugungsschritt (S201) zum Ausführen einer ersten Bilderzeugungsfunktion in der Bilderzeugungsvorrichtung (100), nachdem bestimmt wurde, dass die in der Authentifizierungsstelle ausgeführte Authentifizierung erfolgreich war, und anschließend einen zweiten Bilderzeugungsschritt (S407) zum Ausführen einer zweiten Bilderzeugungsfunktion in der Bilderzeugungsvorrichtung (100) ohne einen zusätzlichen Benutzerauthentifizierungsinformation-Erlangungsschritt .

17. Benutzerauthentifizierungsprogramm nach Anspruch 16, wobei:
in einem Fall, in dem der Authentifizierungsstellen-Bestimmungsschritt (S601) die Bilderzeugungsvorrichtung (100) als Authentifizierungsstelle bestimmt, der Authentifizierungsschritt (S602) die Authentifizierung des Benutzers in der Bilderzeugungsvorrichtung (100) ausführt.

18. Benutzerauthentifizierungsprogramm nach Anspruch 16, wobei:
in einem Fall, in dem der Authentifizierungsstellen-Bestimmungsschritt (S601) die Authentifizierungsvorrichtung (92) als Authentifizierungsstelle bestimmt, die Authentifizierungsvorrichtung (92) die Authentifizierung des Benutzers ausführt, und die Bilderzeugungsvorrichtung (100) ein Resultat der in der Authentifizierungsvorrichtung (92) ausgeführten Authentifizierung erlangt.

19. Computerprogrammprodukt, umfassend ein computerlesbares Medium, das das Benutzerauthentifizierungsprogramm nach einem der Ansprüche 16 bis 18 speichert.

## Revendications

1. Procédé d'authentification d'utilisateur pour un appareil de formation d'images (100) pouvant être connecté via un réseau à un dispositif d'authentification (92) effectuant l'authentification d'un utilisateur, ledit procédé d'authentification d'utilisateur comprenant
une étape d'obtention d'informations d'authentification d'utilisateur (S103) consistant à obtenir des informations d'authentification d'utilisateur pour effectuer l'authentification de l'utilisateur ;
une étape de détermination de partie d'authentification (S601) consistant à déterminer le dispositif d'authentification (92) ou le dispositif de formation d'images (100) en tant que partie d'authentification, déterminant de ce fait s'il faut effectuer l'authentification de l'utilisateur dans le dispositif d'authentification (92) ou effectuer l'authentification de l'utilisateur dans l'appareil de formation d'images (100), sur la base d'informations d'ensembles d'authentification indiquant s'il faut effectuer l'authentification de l'utilisateur dans ledit appareil d'authentification ou effectuer l'authentification de l'utilisateur dans ledit appareil de formation d'images ;
une étape d'authentification (S602) consistant à effectuer l'authentification de l'utilisateur dans la partie d'authentification déterminée lors de l'étape de détermination de partie d'authentification (S601) en utilisant les informations d'authentification d'utilisateur
une première étape de formation d'image (S201) consistant à exécuter une première fonction de formation d'image dans l'appareil de formation d'image (100) après qu'il a été déterminé que l'authentification effectuée dans la partie d'authentification a abouti, puis une deuxième étape de formation d'image (S407) consistant à effectuer une deuxième fonction de formation d'image dans l'appareil de formation d'images (100) sans étape supplémentaire d'obtention d'informations d'authentification d'utilisateur.

2. Procédé d'authentification d'utilisateur selon la revendication 1, comprenant en outre :
une étape d'affichage (S107) consistant à afficher un résultat de l'authentification de l'utilisateur lors de l'étape d'authentification (S602) effectuée par la partie d'authentification déterminée à l'étape de détermination de partie d'authentification (S601), sur une partie d'affichage (112) de l'appareil de formation d'images (100).

3. Procédé d'authentification d'utilisateur selon la revendication 2, dans lequel l'étape d'affichage (S107) comprend l'affichage d'un nom d'utilisateur de l'utilisateur authentifié avec succès par l'étape d'authentification (S602), sur un écran de la partie d'affichage (112) de l'appareil de formation d'image (100).

4. Procédé d'authentification d'utilisateur selon la revendication 2 ou 3, dans lequel l'étape d'affichage (S107) comprend l'affichage d'une pluralité de fonctions, comprenant la première fonction de formation d'image et la seconde fonction de formation d'image, disponibles pour l'utilisateur authentifié avec succès par l'étape d'authentification (S602), sur un écran de la partie d'affichage (112) de l'appareil de formation d'images (100).

5. Procédé d'authentification d'utilisateur selon l'une quelconque des revendications 1 à 4, dans lequel l'étape d'obtention d'informations d'authentification d'utilisateur (S103) obtient les informations d'authentification d'utilisateur comprenant un identifiant d'utilisateur et un mot de passe qui sont entrés par l'utilisateur à partir d'un panneau de commande (130).

6. Procédé d'authentification d'utilisateur selon les revendications 1 à 5, dans lequel l'étape d'obtention d'informations d'authentification d'utilisateur (S103) obtient les informations d'authentification d'utilisateur lues à partir d'une carte à puce ou d'une carte magnétique par un lecteur de carte.

7. Procédé d'authentification d'utilisateur selon l'une des revendications 1 à 6, comprenant en outre :
une étape d'affichage, d'un carnet d'adresses de l'utilisateur authentifié avec succès par l'étape d'authentification (S602), sur un écran d'une partie d'affichage (112) de l'appareil de formation d'images (100).

8. Procédé d'authentification d'utilisateur selon l'une quelconque des revendications 1 à 7, dans lequel l'appareil de formation d'image (100) est configuré pour inclure une base de données stockant des informations d'authentification d'utilisateur différentes des informations d'authentification d'utilisateur stockées dans une base de données incluse dans le dispositif d'authentification (92).

9. Procédé d'authentification d'utilisateur selon l'une quelconque des revendications 1 à 8, dans lequel les informations de l'ensemble d'authentification sont entrées par l'utilisateur à partir d'un écran de ensemble d'authentification, et
l'écran de l'ensemble d'authentification comprend un premier élément de l'ensemble indiquant une authentification externe effectuée par l'appareil d'authentification (92), et un second article de l'ensemble indiquant une authentification interne effectuée par l'appareil de formation d'images (100).

10. Procédé d'authentification d'utilisateur selon l'une quelconque des revendications 1 à 9, dans lequel la première fonction de formation d'image réalisée dans la première étape de formation d'image est une fonction de copie, et la deuxième fonction de formation d'image effectuée dans la deuxième étape de formation d'image est une fonction de télécopie après avoir exécuté la fonction de copie sans effectuer d'étape supplémentaire d'obtention d'informations d'authentification de l'utilisateur.

11. Procédé d'authentification d'utilisateur selon l'une quelconque des revendications 1 à 10, dans lequel l'étape de détermination de partie d'authentification (S601) consiste à déterminer le dispositif d'authentification (92) ou l'appareil de formation d'image (100) en tant que moyen d'authentification pour l'authentification de l'utilisateur.

12. Appareil de formation d'images (100) pouvant être connecté via un réseau à un appareil d'authentification (92) qui effectue l'authentification d'un utilisateur, ledit appareil de formation d'images comprenant :
un moyen d'obtention d'informations d'authentification d'utilisateur (53; S103) pour obtenir des informations d'authentification d'utilisateur afin d'effectuer l'authentification de l'utilisateur ;
un moyen de détermination de partie d'authentification (38; S601) pour déterminer le dispositif d'authentification (92) ou le dispositif de formation d'images (100) en tant que partie d'authentification, déterminant ainsi s'il faut exécuter l'authentification de l'utilisateur dans le dispositif d'authentification (92) ou pour exécuter l'authentification de l'utilisateur dans l'appareil de formation d'images (100), sur la base d'informations de l'ensemble d'authentification indiquant s'il faut effectuer l'authentification de l'utilisateur dans ledit appareil d'authentification ou effectuer l'authentification de l'utilisateur dans ledit appareil de formation d'image ;
un moyen d'authentification (38; S602) pour effectuer l'authentification de l'utilisateur dans la partie d'authentification déterminée par le moyen de détermination de partie d'authentification (38; S601) en utilisant les informations d'authentification de l'utilisateur ; et un moyen d'exécution de fonction (4; 21, 22, 40; S201, S407) pour exécuter une première fonction de formation d'image dans l'appareil de formation d'image (100) après qu'il a été déterminé que l'authentification effectuée dans la partie d'authentification a abouti, et ensuite une deuxième fonction de formation d'image dans l'appareil de formation d'image (100) sans que le moyen d'obtention d'informations d'authentification d'utilisateur (53; S103) obtienne des informations supplémentaires d'authentification d'utilisateur.

13. Appareil de formation d'images (100) selon la revendication 12, comprenant en outre :
un panneau de commande (130, 112; S107) pour afficher, sur un écran, une pluralité de fonctions, y compris la première fonction de formation d'image et la deuxième fonction de formation d'image, disponible pour l'utilisateur après l'authentification réussie de l'utilisateur contrôlée par le moyen d'authentification (38; S602),
dans lequel le moyen d'exécution de fonction (4; 21, 22, 40; S201, S407) exécute chacune de la pluralité de fonctions de l'appareil de formation d'image (100) sélectionné par l'utilisateur sur l'écran après une authentification réussie de l'utilisateur contrôlée par le moyen d'authentification (38; S602).

14. Appareil de formation d'image (100) selon la revendication 12, dans lequel, dans un cas où le moyen de détermination de partie d'authentification (38; S601) détermine l'appareil de formation d'image (100) en tant que partie d'authentification, le moyen d'authentification (38; S602) effectue l'authentification de l'utilisateur dans l'appareil de formation d'images (100).

15. Appareil de formation d'images (100) selon la revendication 12, dans lequel, dans un cas où le moyen de détermination de partie d'authentification (38 ; S601) détermine le dispositif d'authentification (92) en tant que partie d'authentification, le dispositif d'authentification (92) effectue l'authentification de l'utilisateur et l'appareil de formation d'images (100) obtiennent un résultat de l'authentification effectuée dans l'appareil d'authentification (92).

16. Programme d'authentification d'utilisateur qui, lorsqu'il est exécuté par un ordinateur, oblige l'ordinateur à mettre en oeuvre un processus d'authentification d'utilisateur dans un appareil de formation d'images (100) pouvant être connecté via un réseau à un dispositif d'authentification (92) qui effectue authentification d'un utilisateur, ledit processus d'authentification d'utilisateur comprenant :
une étape d'obtention d'informations d'authentification d'utilisateur (S103) consistant à obtenir des informations d'authentification d'utilisateur pour effectuer l'authentification de l'utilisateur ;
une étape de détermination de partie d'authentification (S601) consistant à déterminer le dispositif d'authentification (92) ou le dispositif de formation d'images (100) en tant que partie d'authentification, déterminant de ce fait s'il faut effectuer l'authentification de l'utilisateur dans le dispositif d'authentification (92) ou effectuer l'authentification de l'utilisateur dans l'appareil de formation d'image (100), sur la base d'une information d'ensemble d'authentification indiquant s'il faut effectuer l'authentification de l'utilisateur dans ledit appareil d'authentification ou effectuer l'authentification de l'utilisateur dans ledit appareil de formation d'image ;
une étape d'authentification (S602) consistant à effectuer l'authentification de l'utilisateur dans la partie d'authentification déterminée lors de l'étape de détermination de partie d'authentification (S601) en utilisant les informations d'authentification d'utilisateur
une première étape de formation d'image (S201) consistant à effectuer une première fonction de formation d'image dans l'appareil de formation d'image (100) après qu'il a été déterminé que l'authentification effectuée dans la partie authentification a réussi et, par la suite, une étape de formation d'image secondaire (S407) consistant à effectuer une deuxième fonction de formation d'image dans l'appareil de formation d'images (100) sans étape supplémentaire d'obtention d'informations d'authentification d'utilisateur.

17. Programme d'authentification d'utilisateur selon la revendication 16, dans lequel :
dans le cas où l'étape de détermination de partie d'authentification (S601) détermine l'appareil de formation d'image (100) en tant que partie d'authentification, l'étape d'authentification (S602) exécute l'authentification de l'utilisateur dans l'appareil de formation d'image (100).

18. Programme d'authentification d'utilisateur selon la revendication 16, dans lequel :
dans un cas où l'étape de détermination de partie d'authentification (S601) détermine le dispositif d'authentification (92) en tant que partie d'authentification, le dispositif d'authentification (92) effectue l'authentification de l'utilisateur, et l'appareil de formation d'image (100) obtient un résultat de l'authentification effectuée dans le dispositif d'authentification (92).

19. Produit programme d'ordinateur comprenant un support lisible par ordinateur stockant le programme d'authentification d'utilisateur selon l'une quelconque des revendications 16 à 18.
